# DEMANDE DE BREVET EUROPEEN

(11) **EP 1 734 382 A1**
(43) Date de publication de la demande: **20.12.2006**
(21) Numéro de dépôt: 06290819.9
(22) Date de dépôt: 22.05.2006
(51) Int. Cl.: G01S 17/02, B66C 13/46

(54) **Dispositif de détermination de la position d'un objet mobile par rapport à un point fixe**

(30) Priorité: 06.06.2005 FR 0505688
(71) Demandeur: ARCK SENSOR, 31520 Ramonville Saint Agne (FR)
(72) Inventeur: Brouant, Marc, 11410 Marquein (FR); Coutris, Jean, 31500 Toulouse (FR)
(74) Mandataire: Célanie, Christian

(57) **Abrégé**

L'invention concerne un dispositif de détermination de la position d'un objet mobile par rapport à un objet fixe.

Il comprend un moyen d'émission 46 d'un faisceau lumineux infrarouge fixé sur l'objet mobile pour éclairer au moins partiellement l'objet fixe, un moyen de réception 21 du faisceau réfléchi fixé sur l'objet mobile et des moyens d'analysé 40, 41 du faisceau réfléchi pour délimiter ses variations d'intensité. Le moyen d'émission est constitué d'au moins une diode électroluminescente dont le faisceau est focalisé et décalé angulairement par rapport à la direction perpendiculaire à l'objet fixe.

Application au positionnement de deux objets l'un par rapport à l'autre.

## Description

Le secteur technique de la présente invention est celui des dispositifs de détermination du positionnement d'un objet mobile par rapport à un point fixe.

Dans le domaine technique particulier des conteneurs de marchandises, il est bien connu de prévoir des moyens de préhension de ces conteneurs disposés sur un navire ou sur une aire de stockage. Ces moyens comprennent généralement une grue portant en bout de câbles un palonnier sous la forme d'un cadre dont les dimensions correspondent à celles de la face supérieure du conteneur et portant des moyens d'accrochage du palonnier dans les coins iso du conteneur. L'opérateur affecté à cette manoeuvre ne distingue pas la position du palonnier par rapport au conteneur. Il procède donc par tâtonnement jusqu'à l'adaptation complète du palonnier sur le conteneur. Cette façon de faire est consommatrice de temps conduisant à une immobilisation plus longue du navire. Il en est de même lors de la recherche du conteneur sur l'aire de stockage.

Le but de la présente invention est de fournir un dispositif permettant de repérer avec une très grande précision la position d'un objet fixe tel un conteneur à l'aide d'un objet mobile tel un palonnier, et ce dans un temps très court.

L'invention a donc pour objet un dispositif de détermination de la position d'un objet mobile par rapport à un objet fixe, caractérisé en ce qu'il comprend un moyen d'émission d'un faisceau lumineux infrarouge fixé sur l'objet mobile pour éclairer au moins partiellement l'objet fixe, un moyen de réception du faisceau réfléchi fixé sur l'objet mobile et des moyens d'analyse du faisceau réfléchi pour délimiter ses variations d'intensité.

Selon une caractéristique, le moyen d'émission est constitué d'au moins une diode électroluminescente dont le faisceau est focalisé.

Selon une autre caractéristique, le faisceau est décalé angulairement par rapport à la direction perpendiculaire à l'objet fixe.

Avantageusement, le faisceau de la diode électroluminescente est focalisé à l'aide d'une lentille semi-cylindrique.

Selon une autre caractéristique, le moyen d'émission est constitué par un ensemble de barrettes de diodes électroluminescentes disposées parallèlement les unes aux autres, un ensemble de lentilles étant associé aux diodes électroluminescentes.

Avantageusement, l'ensemble des diodes électroluminescentes est solidaire d'un support incliné d'un angle γ par rapport à une direction horizontale délimitée par l'objet fixe, l'ensemble de lentilles étant incliné du même angle.

Avantageusement encore, le dispositif comprend un ensemble de barrettes de diodes électroluminescentes et de lentilles disposé de part de d'autre du moyen de réception.

Selon encore une autre caractéristique, le moyen de réception est constitué par un capteur linéaire à photodiodes.

Avantageusement, le capteur est muni de modules de réception et de filtrage centrés sur la longueur d'onde du moyen d'émission.

Selon encore une autre caractéristique, les moyens d'analyse du faisceau réfléchi sont aptes à repérer les zones d'intensité lumineuse différente pour détecter la présence de l'objet fixe et sa position.

Selon encore une autre caractéristique, le moyen d'émission est alimenté par impulsions afin d'éclairer l'objet fixe de manière intermittente.

L'invention concerne également un procédé de mettant en oeuvre un dispositif selon l'invention, caractérisé en ce qu'on éclaire à l'aide de diodes électroluminescentes un objet fixe, on analyse le faisceau réfléchi afin de déterminer les plages de luminosité différente, on détermine les zones de luminosité forte représentatives de l'information présence de l'objet fixe, on enregistre dans une mémoire cette information, et on répète les mêmes étapes en plusieurs points représentatifs de l'objet fixe.

Une application du dispositif réside en ce que l'objet fixe est un conteneur, en ce que l'objet mobile est un palonnier se présentant sous la forme d'un cadre dont les dimensions sont adaptées à celles de la face du conteneur en regard et en ce qu'on place un dispositif selon l'invention sur chacun des côtés du cadre.

Un tout premier avantage du dispositif selon l'invention réside dans le fait que la détection de l'objet s'effectue sans contact avec l'objet fixe par simple analyse d'un faisceau réfléchi.

Un autre avantage réside dans le fait que le dispositif peut être intégré dans un ensemble étanche et sans pièces mobiles permettant sa mise en oeuvre en milieu salin.

Un autre avantage réside dans le fait que le dispositif est insensible à l'état de surface de l'objet fixe, qu'elle soit neuve, usée, peinte ou rouillée.

Un autre avantage encore réside dans le fait que le système peut intégrer une fonction automatique d'analyse de la lumière réfléchie par l'environnement et faciliter ainsi la détection en toutes circonstances.

D'autres caractéristiques, détails et avantages de l'invention ressortiront plus clairement de la description donnée ci-après à titre indicatif en relation avec des dessins dans lesquels :
- la figure 1 représente un exemple schématique de l'implantation du dispositif selon l'invention,
- la figure 2 représente le faisceau de lumière émise par deux diodes électroluminescentes disposées à proximité l'une de l'autre,
- la figure 3 représente la forme du faisceau reçu par un capteur de mesure qui serait placé en face et loin du système d'émission de lumière selon une première direction,
- la figure 4 représente la forme du faisceau selon une direction perpendiculaire à la première direction,
- la figure 5 est une coupe montrant la structure mécanique du dispositif,
- la figure 6 est une coupe d'un boîtier intégrant le dispositif selon l'invention, à titre d'exemple de mise en oeuvre du dispositif,
- les figures 7 et 8 montrent la réalisation des lentilles de focalisation du faisceau émetteur, et
- la figure 9 montre un synoptique de l'organisation du dispositif selon l'invention.

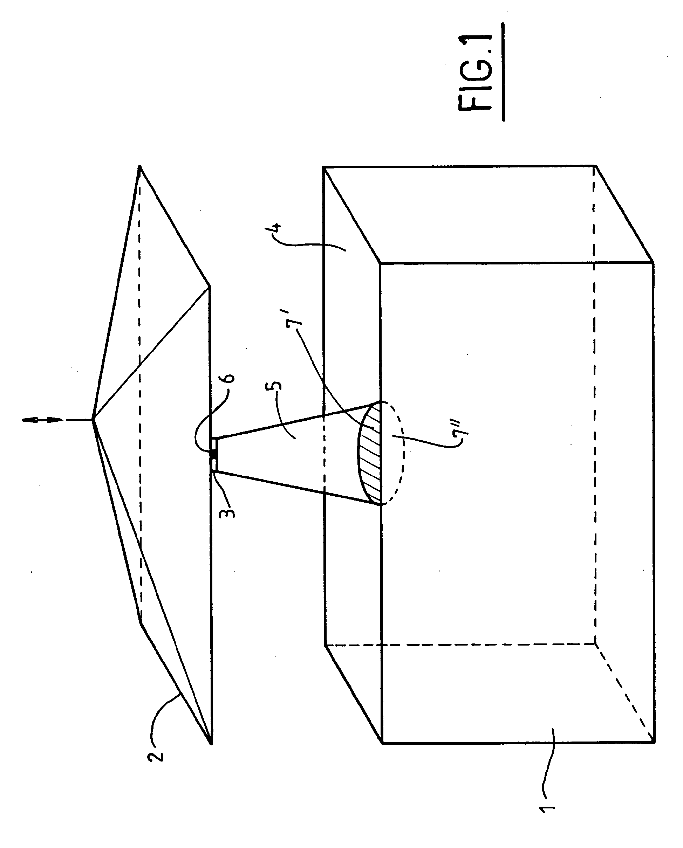

Sur la figure 1, on a représenté un objet fixe 1 pouvant être un conteneur par exemple, disposé soit sur un navire soit sur une aire de stockage et dont on souhaite assurer la manutention. A cette fin, on vient à l'aide d'un objet mobile 2 assurer la prise en charge de cet objet fixe afin de le déplacer d'un point à un autre. Cet objet mobile 2 est par exemple un palonnier se présentant sous la forme d'un cadre épousant la forme de la surface supérieure 4 du conteneur. On fixe sur l'objet mobile un dispositif 3 de détermination de la position de ce conteneur 1. Préférentiellement, ce dispositif 3 est disposé sur le bord externe du cadre. Ce dispositif émet un faisceau lumineux 5 qui vient frapper une zone 7' de la face 4 du conteneur 1, l'autre zone 7" du faisceau représentée en pointillé correspondant à une dissipation de la lumière ou à une réflexion faible par une surface située à un niveau inférieur à celui de la face 4. Des moyens de calcul décrits ci-après permettent de détecter la ligne séparatrice de ces deux zones de réflexion distinctes et donc de détermine une arête de la face 4 du conteneur 1. En disposant judicieusement des capteurs 6 sur l'objet mobile 2, on comprend qu'on peut déterminer les différentes arêtes du conteneur et amener très rapidement l'objet mobile au-dessus de l'objet fixe de manière certaine pour obtenir un gain de temps très appréciable dans la manutention de ce genre d'objet. On met donc en oeuvre selon l'invention le principe de la détection synchrone.

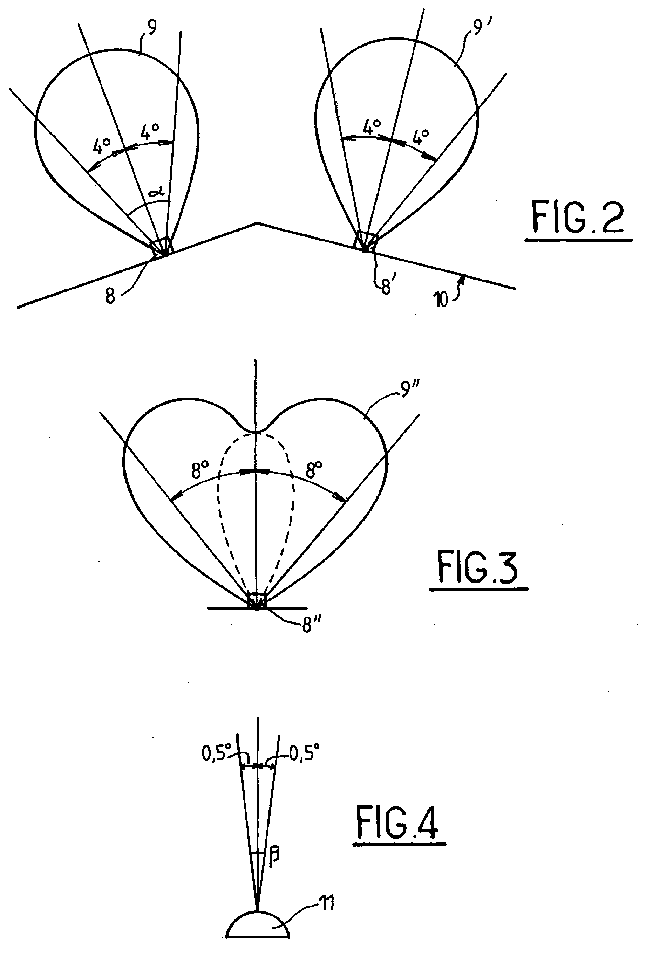

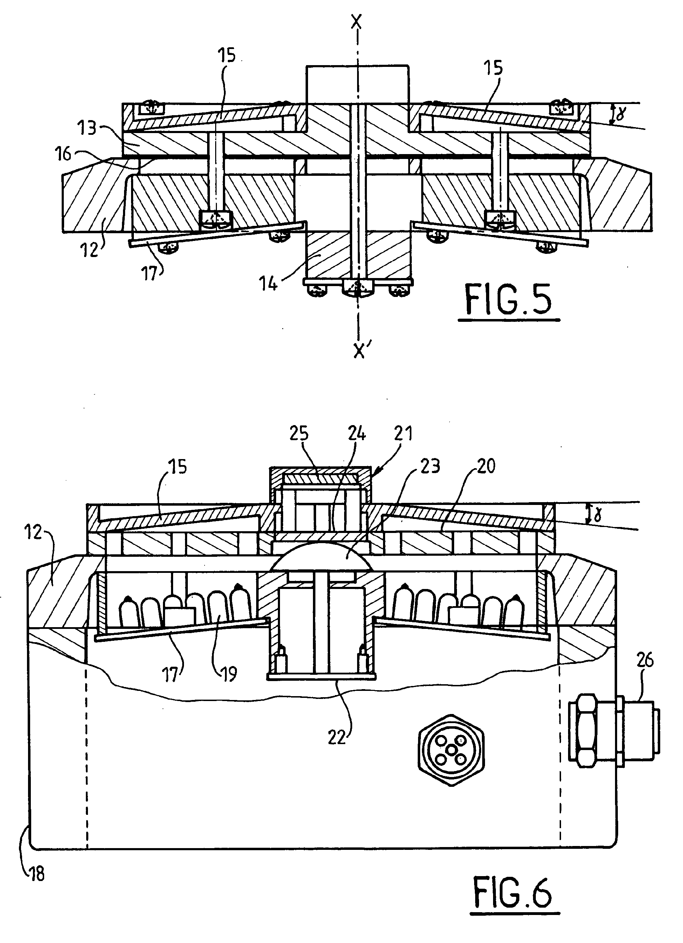

Pour détecter l'arête de l'objet fixe 1, on met en oeuvre selon la figure 2 une diode électroluminescente 8 dont le faisceau 9 délimite un angle utile de l'ordre de quelques degrés. La coupe représentée sur cette figure est pratiquée suivant un premier plan confondu avec le plan de la figure et montre la partie étalée du faisceau. Ce faisceau est focalisé par une lentille 11 comme il sera expliqué ci-après afin d'obtenir afin d'obtenir un angle β de l'ordre de 1° comme cela est représenté sur la figure 4 selon un second plan perpendiculaire au premier. Cette focalisation selon l'invention permet de réduire les dimensions du faisceau et donc de la surface réfléchissante. Sur la figure 2, on a encore représenté la combinaison de deux diodes électroluminescentes 8 et 8' placées à distance l'une de l'autre et émettant les deux faisceaux 9 et 9', chacune selon un angle utile de 8°. Lorsque le faisceau réfléchi est reçu par un capteur, on obtient une combinaison de ces deux faisceaux comme cela est représenté sur la figure 3. Ainsi, en utilisant deux diodes électroluminescentes 8 et 8', on obtient un faisceau 9" provenant d'une diode 8" qui serait unique selon un angle de réception équivalent au double de celui de chaque capteur, soit 16° dans l'exemple décrit. Sur la figure 2, on a encore représenté une disposition particulière des deux diodes électroluminescentes sur un support 10 constitué de deux parties jointives inclinées. Cette inclinaison permet de bien uniformiser les performances au centre et au bord du faisceau réfléchi.

Sur la figure 5 qui est une coupe d'un exemple de réalisation concret de l'invention, on a représenté le couvercle 12 d'un boîtier décrit en relation avec la figure 6, sur lequel on vient fixer une platine externe 13 et une platine interne 14. Sur la platine externe 13, on fixe un support 15 de lentilles dont la surface plane est inclinée de part et d'autre du plan médian passant par l'axe XX'. L'angle d'inclinaison γ est de l'ordre de 1 à 6°. Un joint 16 disposé entre le support 15 et la platine 13 permet d'assurer l'étanchéité entre ces deux pièces. La platine interne 14 reçoit également un support 17 sur lequel les diodes électroluminescentes vont être fixées. L'ensemble de ces pièces est fixé à l'aide de vis.

Sur la figure 6, on a représenté une coupe d'un boîtier 18 incorporant l'ensemble des éléments constitutifs du dispositif selon l'invention et sur lequel est fixé le couvercle 12. Ce boîtier présente une forme sensiblement parallélépipédique. Le support 17 se présente sous la forme d'une carte électronique supportant les diodes électroluminescentes 19 disposées dans le cas présent sur six rangées. Deux groupes de diodes électroluminescentes sont disposés dans ce boîtier afin de combiner les faisceaux lumineux comme cela a été expliqué en relation avec la figure 3. Ces deux groupes de diodes électroluminescentes constituent le moyen d'émission 3 dont l'intérêt a été expliqué en relation avec la figure 3. La carte électronique est disposée parallèlement au support 15 et est donc inclinée du même angle γ que ce support 15. Cette inclinaison permet d'éliminer le faisceau réfléchi perpendiculairement à l'objet fixe et de ne pas saturer le capteur. Entre le support 15 et le couvercle 12 on dispose un filtre 20 destiné à fixer la longueur d'onde des diodes électroluminescentes 19. Dans la partie centrale du boîtier 18, on prévoit la fixation des moyens de réception 21 constitués d'une photodiode 22, d'une lentille 23 de focalisation, d'un filtre 24 et d'une fenêtre optionnelle de protection 25. Sur la figure, on voit encore le connecteur 26 du boîtier pour l'alimentation en courant électrique. Le boîtier peut être rendu parfaitement étanche pour résister à la corrosion saline. Bien entendu, des pattes de fixation à l'objet mobile sont prévues pour les relier ensemble.

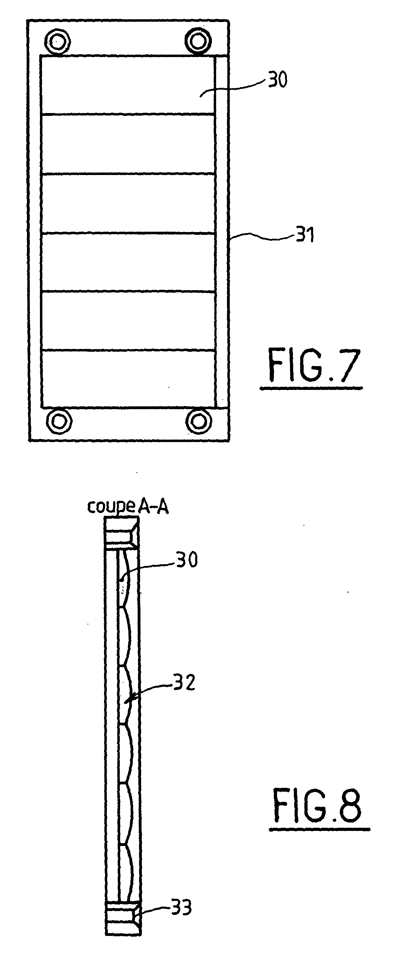

Les figures 7 et 8 illustrent la réalisation des lentilles 30 semi-cylindriques sous la forme d'une plaquette 31. Ces lentilles 30 sont moulées ensembles de manière jointive en présentant une face bombée 32 afin de concentrer le faisceau. Avantageusement, la plaquette 31 est en matière plastique transparente. La plaquette est munie de perforations 33 afin de la fixer sur son support 15.

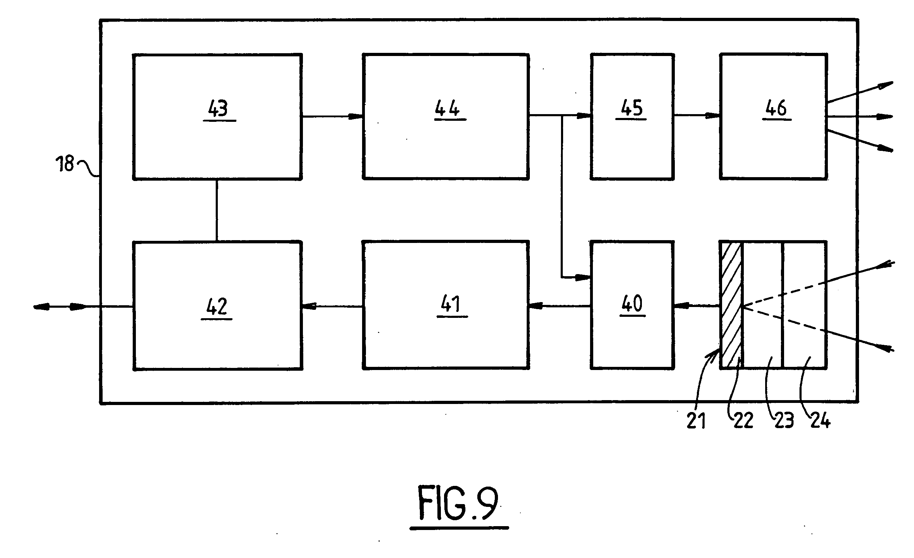

La figure 9 représente un schéma synoptique des composants du boîtier 18 dans lequel l'ensemble des composants est inséré. Les moyens récepteurs 21 sont constitués comme indiqué précédemment de la photodiode 22, de la lentille 23 de focalisation et du filtre 24. Cet ensemble constitue un capteur linéaire à photodiodes. Le moyen 21 constitue l'organe de vision du dispositif selon l'invention. Il permet de scruter un alignement de points focalisés par la lentille 23 pour balayer un champ suffisant de l'ordre 10°. Le filtre 24 est un filtre passe bande centré sur longueur d'onde du module d'émission 46. Le faisceau lumineux reçu est dirigé vers un module 40 ou illuminateur, dont le rôle est de numériser son profil. Le signal électrique produit est envoyé dans un calculateur 41 qui analyse ce signal afin d'analyser les plages de réflexion lumineuses, sombres ou opaques de l'objet fixe et déterminer ainsi le bord de cet objet fixe. Les modules 40 et 41 constituent les moyens d'analyse du faisceau réfléchi. L'information délivrée est alors transmise à un module de communication 42 permettant d'échanger les informations avec l'opérateur. En sortie ce module 42 donnera le résultat du calcul effectué, les erreurs détectées par le capteur, la présence et l'état de ce capteur. En entrée, ce module 42 reçoit le top de synchronisation avec l'ensemble des capteurs disposés sur l'objet mobile, le top d'adaptation des paramètres de calcul aux conditions atmosphériques et les ordres de configuration particulière de l'opérateur. Ces éléments sont alimentés en courant électrique par un module d'alimentation 43, par exemple un courant continu de 24 Volt. Le module 43 alimente également un module 44 de contrôle de la détection synchrone pour synchroniser l'émission lumineuse du module illuminateur 46. Ce module d'illumination 46 regroupe les plaquettes 31 de diodes électroluminescentes infrarouges de même longueur d'onde que le filtre 24. Entre les modules 44 et 46 est inséré un module pulseur 45 dont le rôle est de pulser l'alimentation du module 46 et d'éviter ainsi une alimentation permanente des diodes 19. Comme il apparaît sur la figure, les modules 45 et 40 sont synchronisés par le module 44.

Il est possible de regrouper les modules 43, 42, 41, 40 44, 45 sur une seule et même carte électronique. Le module 21 se présente sous la forme d'un fût mécanique sur lequel sont collés le filtre 24 et la lentille 23.

Le fonctionnement du dispositif selon l'invention est le suivant. Les diodes électroluminescentes 19 émettent un faisceau de lumière infrarouge pulsée qui vient se réfléchir sur l'objet fixe situé en dessous et sensiblement à la verticale de celui-ci. Le faisceau lumineux peut se trouver en dehors de la surface de l'objet fixe, ou bien complètement sur cette surface, ou encore à cheval, c'est-à-dire au niveau de l'arête de l'objet. L'analyse du faisceau réfléchi par le module 41 permet de savoir dans quelle position se trouve le dispositif, et donc l'objet mobile, par rapport à l'objet fixe. L'arête de l'objet fixe est vue comme une transition d'une zone très lumineuse à une zone très sombre. En couplant l'information venant de plusieurs dispositifs, il est aisé de commander la position de l'objet mobile par rapport à l'objet fixe.

## Revendications

1. Dispositif de détermination de la position d'un objet mobile (2) par rapport à un objet fixe (1), **caractérisé en ce qu'**il comprend un moyen d'émission (3) d'un faisceau lumineux infrarouge fixé sur l'objet mobile pour éclairer au moins partiellement l'objet fixe, un moyen de réception (6) du faisceau réfléchi fixé sur l'objet mobile et des moyens d'analyse (40, 41) du faisceau réfléchi pour délimiter ses variations d'intensité.

2. Dispositif selon la revendication 1, **caractérisé en ce que** le moyen d'émission (3) est constitué d'au moins une diode électroluminescente (19) dont le faisceau est focalisé.

3. Dispositif selon la revendication 2, **caractérisé en ce que** le faisceau de la diode électroluminescente (19) est focalisé à l'aide d'une lentille semi-cylindrique (11).

4. Dispositif selon la revendication 2 ou 3, **caractérisé en ce que** le moyen d'émission (3) est constitué par un ensemble de barrettes de diodes électroluminescentes (17, 19) disposées parallèlement les unes aux autres, un ensemble de lentilles (11) étant associé aux diodes électroluminescentes (19).

5. Dispositif selon la revendication 4, **caractérisé en ce que** l'ensemble des diodes électroluminescentes (19) est solidaire d'un support (17) incliné d'un angle γ par rapport à une direction horizontale délimitée par l'objet fixe (1), l'ensemble de lentilles (19) étant incliné du même angle.

6. Dispositif selon la revendication 5, **caractérisé en ce qu'**il comprend un ensemble de barrettes de diodes électroluminescentes disposé de part de d'autre du moyen de réception (6).

7. Dispositif de selon l'une quelconque des revendications précédentes, **caractérisé en ce que** le moyen de réception (6) est constitué par un capteur linéaire à photodiodes (22).

8. Dispositif selon la revendication 7, **caractérisé en ce que** le capteur (22) est muni de modules (23, 24) de réception et de filtrage centrés sur la longueur d'onde du moyen d'émission (3).

9. Dispositif selon l'une quelconque des revendications précédentes, **caractérisé en ce que** les moyens d'analyse (40, 41) du faisceau réfléchi sont aptes à repérer les zones d'intensité lumineuse différente pour détecter la présence de l'objet fixe (1) et sa position.

10. Dispositif selon l'une quelconque des revendications précédentes, **caractérisé en ce que** le moyen d'émission (3) est alimenté par impulsions afin d'éclairer l'objet fixe (1) de manière intermittente.

11. Procédé de mettant en oeuvre un dispositif selon l'une quelconque des revendications précédentes, **caractérisé en ce qu'**on éclaire à l'aide de diodes électroluminescentes (19) un objet fixe (1), on analyse le faisceau réfléchi afin de déterminer les plages de luminosité différente, on détermine les zones de luminosité forte représentatives de l'information présence de l'objet fixe, on enregistre dans une mémoire cette information, et on répète les mêmes étapes en plusieurs points représentatifs de l'objet fixe.

12. Application du dispositif selon l'une quelconque des revendications 1 à 10, **caractérisé en ce que** l'objet fixe (1) est un conteneur, **en ce que** l'objet mobile (2) est un palonnier se présentant sous la forme d'un cadre dont les dimensions sont adaptées à celles de la face du conteneur en regard et **en ce qu'**on place un dispositif selon l'invention sur chacun des côtés du cadre.
